# EUROPÄISCHE PATENTSCHRIFT

(11) **EP 3 759 501 B1**
(45) Veröffentlichungstag und Bekanntmachung des Hinweises auf die Patenterteilung: **13.11.2024**
(21) Anmeldenummer: 19708821.4
(22) Anmeldetag: 28.02.2019
(51) Int. Cl.: G01N 35/00, G06T 7/00, G06T 7/73, G06V 10/147, G06V 10/24, G01N 35/10

(54) **KALIBRIERVORRICHTUNG UND VERFAHREN ZUR ERMITTLUNG DER RÄUMLICHEN AUSRICHTUNG EINER AN EINER HALTERUNG GEHALTENEN KAPILLARE**
CALIBRATION APPARATUS AND METHOD FOR ASCERTAINING THE SPATIAL ALIGNMENT OF A CAPILLARY HELD IN A HOLDER
DISPOSITIF DE CALIBRAGE ET PROCÉDÉ SERVANT À DÉTERMINER L'ORIENTATION SPATIALE D'UN CAPILLAIRE MAINTENU SUR UNE FIXATION

(30) Priorität: 28.02.2018 DE 102018104640
(43) Veröffentlichungstag der Anmeldung: 06.01.2021
(73) Patentinhaber: Sartorius Automated Lab Solutions GmbH, 07745 Jena (DE)
(72) Erfinder: UNGLAUB, David, 07806 Neustadt / Orla (DE); BORNMANN, Gerd, 99427 Weimar (DE); EBERHARDT, Jens, 07546 Gera (DE)
(74) Vertreter: Novagraaf International SA
(86) Internationale Anmeldenummer: PCT/EP2019/054982
(87) Internationale Veröffentlichungsnummer: WO 2019/166548

## Beschreibung

Die Erfindung betrifft eine Kalibriervorrichtung und ein Verfahren zur Ermittlung der räumlichen Ausrichtung einer an einer Halterung gehaltenen Kapillare.

Auf den Gebieten der Zellbiologie, der Mikrobiologie sowie im Bereich der medizinischen Forschung und in der Diagnostik werden oftmals Mikromanipulatoren zur Entnahme oder Zugabe einzelner Zellen, Zellbestandteile oder geringer Medienmengen beispielsweise in Probenbehälter wie Multiwellplatten oder Reagenzgefäße eingesetzt. Als Pipettierwerkzeuge werden dabei oft Kapillaren aus Glas verwendet.

Diese Pipettierwerkzeuge müssen regelmäßig gewechselt werden, wenn eine neue Probe oder ein anderes Medium verwendet wird, um beispielsweise Kontaminationen zu vermeiden und um korrekte Mengenanteile der beteiligten Stoffe in einem Probenansatz zu gewährleisten.

Aus der DE 10 2017 117 789 A1 ist eine Vorrichtung und ein Verfahren zum automatisierten Kapillarwechsel offenbart. Dem dort beschriebenen System, wie auch Systemen mit manuellem Kapillarwechsel ist gemein, dass die geforderte Reproduzierbarkeit bei der Positionierung der Kapillarenspitze im unteren Mikrometerbereich schwer sicherzustellen ist. Grund hierfür sind fertigungstechnische Toleranzen der Kapillaren, sich verändernde Umgebungsbedingungen wie Temperatur und Feuchte und hierdurch verursachte Längenänderungen sowie physikalischen Einflussgrößen wie der Einpresskraft der Kapillaren in ein entsprechendes Gegenstück.

Von besonderem Interesse ist dabei die Information über die exakte Position der Spitze der Kapillare. Eine manuelle Justierung der Kapillare nach einem Wechsel erfordert eine zeitaufwendige Kalibrierung durch einen Benutzer, was die Steigerung des Automatisierungsgrades verhindert und mit einer erhöhten Fehleranfälligkeit einhergeht.

Beispielsweise ist in der US 2013/280143 A1 ein Roboterarm offenbart, der handelsübliche Handpipetten aufnehmen und verfahren kann und an dem zu diesem Zweck eine Kamera und eine Beleuchtung befestigt sind. Mittels der Kamera kann eine Position der Pipettenspitze erfasst werden.

Ferner ist in der EP 1 946 173 B1 eine optische Beobachtungseinheit zur Bestimmung der Kapillarposition offenbart. Unter Nutzung der geringen Tiefenschärfe der Objektive lässt sich eine Positionierung der Kapillaren mit einer Präzision im unteren Mikrometerbereich erzielen. Jedoch versagen solche Verfahren bei der Verwendung von Kapillaren aus Glas und anderen transparenten Materialien. Zudem können eine Neigung der Kapillare und Defekte wie gebrochene Kapillarspitzen und Materialschäden die Genauigkeit der Positionierung massiv beeinträchtigen oder gar eine Bestimmung der Kapillarposition unmöglich machen.

Verfahren zur Bestimmung der Position der Kapillarspitze mittels taktiler Messeinrichtungen können zwar automatisiert durchgeführt werden, bergen jedoch eine hohe Gefahr des Bruchs der Kapillarspitze, beschränken die Kapillargeometrie bezogen auf die minimale Wanddicke, erhöhen die Gefahr einer Kontamination und beschränken den mechanischen Aufbau der Kapillarhalterung.

Der Erfindung liegt daher die Aufgabe zu Grunde, eine Vorrichtung und ein Verfahren anzugeben, mittels denen die räumliche Ausrichtung einer Kapillare unter Vermeidung der Nachteile des Standes der Technik ermittelt werden kann.

Die Aufgabe wird durch eine Kalibriervorrichtung gemäß Anspruch 1 sowie mittels eines Verfahrens gemäß Anspruch 8 gelöst. Vorteilhafte Weiterbildungen der Erfindung sind Gegenstand der abhängigen Ansprüche.

Die Kalibriervorrichtung ist zur optischen Ermittlung der räumlichen Ausrichtung einer an einer Halterung gehaltenen Kapillare ausgebildet. Unter einer Kapillare wird nachfolgend ein hohles Behältnis verstanden, in das insbesondere biologische Proben und Medien aufgenommen und aus diesem wieder abgegeben werden können, um diese beispielsweise in Probenbehälter wie Multiwellplatten zu platzieren oder aus diesen zu entnehmen. Kapillaren im Sinne dieser Beschreibung können beispielsweise dünne, dünnwandige, transparente und/oder teilweise transparente der Aufnahme oder dem Transport dienende hohle Behältnisse wie beispielsweise Kanülen, Nadeln oder Pipettenspitzen sein, wie diese im Laborbetrieb bekannt sind.

Die Kapillaren können in biologischen, biochemischen, pharmazeutischen oder medizinischen Anwendungsbereichen eingesetzt werden.

Die Kalibriervorrichtung weist einen ortsauflösenden Detektor, beispielsweise einen CCD-Detektor oder einen CMOS-Detektor, auf. Ein ortsauflösender Detektor kann auch durch ein Array aus einzelnen Detektoren, beispielsweise durch ein Array aus Sekundärelektronenvervielfachern (PMT: photomultiplier tubes) realisiert sein. Bei einem ortsauflösenden Detektor sind eine Anzahl einzeln auslesbarer Einzelelemente vorhanden, durch die üblicherweise eine zweidimensionale Detektorfläche gebildet ist. Somit ist eine mittels eines der Einzelelemente erfassten Strahlung einem Ursprungsort zuordenbar.

Die erfindungsgemäße Kalibriervorrichtung weist weiterhin zwei Erfassungsstrahlengänge mit jeweils einer Beleuchtungsquelle und die oben genannte Halterung zum Halten der Kapillare auf.

Die Halterung ist mittels der Beleuchtungsquellen mit Beleuchtungslicht aus zwei unterschiedlichen Beleuchtungswinkeln beleuchtet beziehungsweise kann derart beleuchtet werden. Die Beleuchtungsquellen sind beispielsweise LED-Leuchten oder andere Leuchten, die zudem mit einem Filter und/oder mit einem polarisationsdrehenden Element wie einer Phasenplatte oder einem Phasenplättchen versehen sein können. Dem Detektor sind die Erfassungsstrahlengänge zugeordnet, entlang denen je Beleuchtung mit einem der Beleuchtungswinkel Beleuchtungslicht auf den gemeinsamen Detektor gelangt und jeweils ein Bilddatensatz der Halterung und einer optional an dieser gehaltenen Kapillare von dem Detektor sequentiell erfasst wird beziehungsweise erfassbar ist. Außerdem ist eine Auswerteeinheit vorhanden, die derart konfiguriert ist, dass anhand der unter unterschiedlichen Beleuchtungswinkeln, und daher im Ergebnis unter unterschiedlichen Aufnahmewinkeln, erfassten Bilddaten das Vorhandensein sowie eine räumliche Ausrichtung einer an der Halterung gehaltenen Kapillare sowie eine aktuelle IstPosition der Kapillarspitze durch eine Auswertung der erfassten Bilddaten und Bilddatensätze ermittelt werden kann.

Es ist auch möglich, dass die zwei Erfassungsstrahlengänge auf den Detektor führen und die Erfassungsstrahlengänge wahlweise schaltbar sind. Die Eingänge der Erfassungsstrahlengänge sind unter verschiedenen Winkeln auf die Halterung gerichtet, so dass mittels des Detektors Bilddaten unter verschiedenen Aufnahmewinkeln erfassbar sind, d.h. jeder der Erfassungsstrahlengänge stellt Bilddaten bereit, die unter einem bestimmten Aufnahmewinkel erfasst werden beziehungsweise erfassbar sind.

Die Erfindung erlaubt es unter Nutzung der Prinzipien der Triangulation eine räumliche (dreidimensionale) Positionierung und Lage eines vorhandenen Objekts, in diesem Fall der an der Halterung befestigten Kapillare, zu ermitteln. Insbesondere können eine räumliche Position der Kapillare sowie eine räumliche Ausrichtung der Kapillare ermittelt werden. Vorteilhaft ist eine räumliche Position der Kapillarspitze ermittelbar.

In einer möglichen Ausführung der Vorrichtung ist die Halterung zwischen dem Detektor und mindestens einer der Beleuchtungsquellen angeordnet. Diese Ausführung erleichtert die Detektion des Vorhandenseins einer Kapillare an der Halterung, indem es bei einem Vorhandensein zu einer Abschattung oder Abschwächung der Beleuchtungsstrahlung der hinter der Halterung angeordneten Beleuchtungsquelle kommt. Ist dagegen eine Kapillare an der Halterung vorhanden, reicht die Feststellung einer entsprechenden Abschattung beziehungsweise Abschwächung als Beleg für ein Vorhandensein aus.

Außerdem ermöglicht eine solche Ausführung eine optische Überprüfung des Inhalts und/oder des Füllstands der Kapillare. Ferner ist die optische Überprüfung der Unversehrtheit der Kapillare erleichtert, wie weiter unten näher ausgeführt wird.

Erfindungsgemäß sind je Erfassungsstrahlengang jeweils eine Beleuchtungsquelle und ein gemeinsamer Detektor für die beiden Erfassungsstrahlengänge vorhanden. Mit einer solchen Ausführung kann die Anzahl verwendeter Detektoren vorteilhaft reduziert werden. Die Zusammenführung der einzelnen Erfassungsstrahlengänge zu einem gemeinsamen Erfassungsstrahlengang ist mittels strahlvereinigender optischer Mittel wie klassischer Strahlteiler, dichroitischer Strahlteiler, Polarisationsstrahlteiler oder geeigneter Spiegel und/oder optischer Linsen realisiert.

In einer vorteilhaften Ausführung senden die Beleuchtungsquellen jeweils Beleuchtungslicht (Beleuchtungsstrahlung) mit voneinander verschiedenen Wellenlängen oder Wellenlängenbereichen aus. Die Erfassungsstrahlengänge sind vor dem gemeinsamen Detektor mittels eines dichroitischen optischen Elements zu einem gemeinsamen Strahlengang zusammengeführt. Das dichroitische optische Element ist dabei für eine der Wellenlängen reflektierend und für die andere Wellenlänge transparent. Der Vorteil einer solchen Ausführung besteht in der Reduzierung der Anzahl der Detektoren sowie in einem verringerten Bedarf an Bauraum.

Eine solche Zusammenführung der Erfassungsstrahlengänge kann in einer einfachen Ausführung auch unter Verwendung eines Strahlteilers herkömmlicher Bauart, beispielsweise in Form einer geneigten transparenten Platte, erfolgen.

Es ist auch möglich, dass die Beleuchtungsquellen so gewählt sind, dass diese Beleuchtungslicht mit voneinander verschiedenen Polarisationen aussenden und die Erfassungsstrahlengänge vor dem gemeinsamen Detektor mittels eines Polarisationsstrahlteilers zu einem gemeinsamen Strahlengang zusammengeführt sind. Dabei ist der Polarisationsstrahlteiler für Strahlung der einen Polarisation reflektierend und für Strahlung der anderen Polarisation transparent.

Die sich entlang der Erfassungsstrahlengänge ausbreitenden Beleuchtungslichter können mittels des gemeinsamen Detektors simultan oder sequentiell erfasst werden.

Um eine sequentielle Erfassung zu ermöglichen können die Beleuchtungsquellen nacheinander und/oder alternierend angesteuert und ein- beziehungsweise ausgeschalten werden. Es ist auch möglich, dass in den Erfassungsstrahlengängen gesteuert verschließbare Blenden, schaltbare Spiegel, schaltbare Filter vorhanden sind, die wechselweise angesteuert werden beziehungsweise wechselweise angesteuert werden können, so dass entlang des gemeinsamen Strahlengangs jeweils Beleuchtungslicht einer Beleuchtungsquelle erfassbar ist.

Die Vorrichtung kann neben einer Auswerteeinheit eine Steuereinheit umfassen, die anhand von Informationen der Auswerteeinheit Steuerbefehle generiert, die zur Ansteuerung eines Antriebs der Halterung, der Beleuchtungsquellen, der verschließbaren Blenden, der schaltbaren Spiegel, der schaltbaren Filter und/oder des mindestens einen Detektors dienen.

Es kann außerdem eine Dokumentationseinheit in Form eines auslesbaren Speichers vorhanden sein, in dem die erfassten Bilddaten, ermittelte Koordinaten sowie probenbezogenen Informationen wie Probennummer, eine Zeitangabe und/oder die Art eines verwendeten Mediums hinterlegt werden können. Diese Dokumentationseinheit kann Teil der Auswerteeinheit sein.

Die Aufgabe wird ferner mit einem Verfahren zur Ermittlung einer räumlichen Ausrichtung einer an einer Halterung gehaltenen Kapillare in Form einer Kanüle, einer Nadel oder einer Pipettenspitze gelöst. Dabei wird die Halterung mittels wenigstens zweier Beleuchtungsquellen mit Beleuchtungslicht aus mindestens zwei unterschiedlichen Beleuchtungswinkeln beleuchtet. Mittels eines ortsauflösenden Detektors wird unter unterschiedlichen Aufnahmewinkeln je ein Bild der beleuchteten Halterung sequentiell erfasst, wobei die Erfassungsstrahlengänge vor dem gemeinsamen Detektor mittels strahlvereinigender optischer Mittel oder geeigneter Spiegel und/oder optischer Linsen zu einem gemeinsamen Erfassungsstrahlengang zusammengeführt werden. Die erfassten Bilddaten werden als Bilddatensatz an eine Auswerteeinheit übermittelt. Die Aufnahmewinkel und Beleuchtungswinkel sind in der Auswerteeinheit hinterlegt oder werden zusammen mit dem Bilddatensatz an die Auswerteeinheit übermittelt. Anhand der Bildinformationen wird das Vorhandensein einer Kapillare überprüft und verifiziert. Ist das Vorhandensein einer Kapillare erkannt worden, werden zweidimensionale Koordinaten von Außenkonturen der Kapillare ortsaufgelöst in jedem Bilddatensatz extrahiert. Anhand der Koordinaten der Konturen in beiden Bilddatensätzen werden dreidimensionale Koordinaten der Konturen als aktuelle Ist-Koordinaten der Konturen der Kapillare ermittelt. Insbesondere können Ist-Koordinaten der Kapillarspitze ermittelt werden. Die Ist-Koordinaten werden mit Soll-Koordinaten der Kapillare beziehungsweise der Kapillarspitze verglichen. Bei einer unzulässigen Abweichung der ermittelten Ist-Koordinaten von den Soll-Koordinaten werden durch die Auswerteeinheit Steuerbefehle generiert, die als Korrekturbefehle (Offsets) wirken und durch deren Ausführung die Ausrichtung der Kapillare beziehungsweise der Kapillarspitze korrigiert wird.

Optional können auch zusätzlich zweidimensionale Koordinaten von Innenkonturen der Kapillare ermittelt werden, wenn die Kapillare beispielsweise aus einem für das jeweilige Beleuchtungslicht transparenten oder hinreichend opaken Material besteht.

Die Beleuchtungslichter der verschiedenen Erfassungsstrahlengänge werden erfindungsgemäß sequentiell erfasst und ausgewertet. Ein verwendeter Auswertealgorithmus ermöglicht eine sequentielle Erfassung und Auswertung der erfassten Bilddaten.

Das Verfahren kann daher so ausgestaltet sein, dass abwechselnd Beleuchtungslicht der einzelnen Beleuchtungsquellen auf die Halterung gerichtet wird und je Beleuchtungsvorgang mit einem der Beleuchtungslichter Bilddaten der Halterung erfasst werden.

Eine Einzelkanalauswertung wird beispielsweise durch die Verwendung verschließbarer Blenden vor den Beleuchtungsquellen ermöglicht. Auf diese Weise wird nur ein aktiver Erfassungsstrahlengang beleuchtet und in einem Zeitraum nur ein Bild der Kapillare unter einem Aufnahmewinkel erfasst und zur Positionsbestimmung herangezogen.

Die sequentielle Erfassung der Bilddaten ist neben der Verwendung spezieller Optiken zur Strahlkombination auch mittels weiterer mechanischer Lösungen möglich. Beispielsweise kann eine Klappoptik eingesetzt werden, welche je nach Stellung die Erfassung der Bilddaten der Kapillare aus unterschiedlichen Beleuchtungswinkeln erlaubt.

Es ist auch möglich, durch wechselseitiges Bestromen der Beleuchtungsquellen nur den jeweils aktiven Erfassungsstrahlengang zu beleuchten.

Räumliche Koordinaten insbesondere einer an der Halterung vorhandenen Kapillare und deren Kapillarspitze können beispielsweise durch eine Überlagerung erfasster Bilddaten der Beleuchtungsquellen und deren sequentielle Auswertung erfolgen. Da diese Bilddaten unter verschiedenen Beleuchtungswinkeln und Aufnahmewinkeln erzeugt werden, können zweidimensionale Koordinaten der Kapillare, insbesondere von deren Außenkonturen, anhand der Bilddaten eines Erfassungsstrahlengangs ermittelt werden, während die entsprechenden Koordinaten der dritten Raumrichtung anhand der Bilddaten des anderen Erfassungsstrahlengangs ermittelt werden können.

Zur Ermittlung der Koordinaten können bekannte Auswertealgorithmen wie zum Beispiel Binarisierung, Kantenbestimmung und Schnittpunktberechnung eingesetzt werden. Diese Verfahren erlauben es, aus einer zweidimensionalen Bildinformation die exakte Position oder Lage und die Ausrichtung oder Neigung einer Kapillare beziehungsweise der Kapillarspitze zu bestimmen. Als Koordinatensystem können dabei Detektorkoordinaten oder ein vorab zu definierendes Koordinatensystem beispielsweise der Vorrichtung zum Kalibrieren (Maschinenkoordinatensystem) verwendet werden.

Der spätere Bezug der Detektorkoordinaten zu dem Maschinenkoordinatensystem kann über eine einmalige Kalibrierung und Einmessung im Zuge der Inbetriebnahme eines Gerätes durchgeführt werden.

Sind die Koordinaten der Außenkonturen der Kapillare ermittelt, können Ist-Koordinaten der Kapillare mit den erwarteten Soll-Koordinaten verglichen werden. Die Soll-Koordinaten sind beispielsweise in einem Speicher hinterlegte Koordinaten oder Koordinatenbereiche, die von einer korrekt geformten und gehaltenen Kapillare eingenommen werden können. Anhand des Vergleichsergebnisses werden Ist-Koordinaten der Kapillare ermittelt. Entsprechen die Ist-Koordinaten den Soll-Koordinaten, wird diese Information gespeichert. Weichen die Ist-Koordinaten in unzulässiger Weise von den Soll-Koordinaten ab, wird diese Information an eine Steuereinheit gegeben. Die Ausrichtung und/oder Position der Kapillare beziehungsweise der Kapillarspitze können daraufhin korrigiert werden, indem beispielsweise erforderliche Steuerbefehle generiert und an Stellvorrichtungen der Vorrichtung, insbesondere an einen Antrieb der Halterung, geleitet werden.

Alternativ können auch auf einem ansteuerbaren Träger, beispielsweise einem motorisierten Probentisch, Probengefäße mittels der Steuerbefehle korrigierten Koordinaten zugestellt werden, sodass die Kapillarspitze in die jeweiligen Probengefäße führbar ist.

Bei einer Abweichung der Ist-Koordinaten von den Soll-Koordinaten außerhalb der zulässigen Toleranzen kann auch die Kapillare gegen eine andere ausgetauscht werden.

Der Vergleich der Ist- und der Soll-Koordinaten kann auch darauf gerichtet sein, um eventuelle Beschädigungen und/oder Deformationen der Kapillare festzustellen. So kann überprüft werden, ob die Spitze der Kapillare beschädigt ist und/oder ob die Kapillare unzulässige Außenmaße wie eine unzulässige Dicke oder Krümmung aufweist.

Ist an der Halterung eine Kapillare vorhanden und ist diese für ein Beleuchtungslicht mindestens einer der Beleuchtungsquellen transparent, kann die die Kapillare mit Beleuchtungslicht wenigstens einer der Beleuchtungsquellen durchleuchtet und wenigstens ein Bild der durchleuchteten Kapillare erfasst und ausgewertet werden. Anhand der Auswertung werden ein Ist-Zustand der Kapillare, ein Füllstand eines Mediums in der Kapillare und/oder ein Vorhandensein eines Mediums und/oder Partikels in der Kapillare ermittelt.

Die Ermittlung eines Füllstands und/oder das Vorhandensein eines Mediums und/oder Partikels werden durch einen Vergleich der erfassten Innenkonturen mit erwarteten Innenkonturen vorgenommen. Ist beispielsweise ein hinreichend großer Partikel in der Kapillare aufgenommen, sind an der entsprechenden Stelle eines Bildes des Kapillare veränderte Bilddaten, beispielsweise infolge einer Abschwächung des Beleuchtungslichts, feststellbar.

Vor dem Befüllen der Kapillare können Bilddaten der unbefüllten Kapillare erfasst und als Referenz gespeichert werden. Dabei sind beispielsweise Verschmutzungen und/oder Materialinhomogenitäten der Kapillare erkennbar, die anderenfalls als aufgenommener Partikel missinterpretiert werden könnten.

Gleiches gilt für den Füllstand der Kapillare. Ein in der Kapillare aufgenommenes Medium verursacht eine Absorption des hindurchtretenden Beleuchtungslichts. Diese Intensitätsabnahme und/oder eine ganz oder teilweise Blockung des Beleuchtungslichts durch das Medium sind in den Bilddaten feststellbar und können entsprechend ausgewertet und interpretiert werden.

Wird bei der Ermittlung der Ist-Koordinaten der Kapillare festgestellt, dass diese gegenüber den Soll-Koordinaten eine geneigte Ausrichtung aufweist, kann die Information über die Stärke und Richtung der Neigung beispielsweise bei der Ermittlung des Füllstands und/oder der Aufnahme eines Partikels berücksichtigt werden.

Die erfindungsgemäße Vorrichtung und das erfindungsgemäße Verfahren ermöglichen eine ausreichende Positioniergenauigkeit einer Kapillare beziehungsweise der Kapillarspitze insbesondere zur reproduzierbaren Aufnahme eines zu transportierenden kleinen Partikels wie einer Zelle (ca. 10 µm). Weiterhin ermöglichen die Vorrichtung und das Verfahren eine lückenlose Dokumentation der Kapillarspitzenpositionierung und dem Zustand der Kapillarspitze. Des Weiteren kann bei der Verwendung von transparenten Kapillaren eine Füllstandserkennung realisiert werden und die korrekte Aufnahme eines Partikels nachgewiesen und dessen vollständige Abgabe in ein Zielgefäß lückenlos dokumentiert werden.

Die Erfindung dient der Nutzung in Bereichen der Biologie, Pharmakologie, Biochemie und Medizin, bei denen Kapillaren zur seriellen oder parallelen Aufnahme und Passage einzelner kleiner Partikel, Patchen, Injektion oder Entnahme von Zellbestandteilen, biologischen Proben, Zellen, Zellkolonien, Reagenzien und/oder geringer Flüssigkeitsmengen genutzt werden.

Die Erfindung wird nachfolgend anhand von Abbildungen und Ausführungsbeispielen näher erläutert. Es zeigen:
Fig. 1 eine schematische Darstellung einer nicht von der Erfindung umfassten Vorrichtung mit zwei Detektoren in der Draufsicht;
Fig. 2 eine schematische Darstellung der Vorrichtung gemäß Fig. 1 in einer perspektivischen seitlichen Ansicht;
Fig. 3 eine schematische Darstellung einer zweiten nicht von der Erfindung umfassten Vorrichtung mit einem Detektor und einer Beleuchtungsquelle in der Draufsicht;
Fig. 4 eine schematische Darstellung einer dritten nicht von der Erfindung umfassten Vorrichtung mit einem Detektor und einer Beleuchtungsquelle in der Draufsicht;
Fig. 5 eine schematische Darstellung einer vierten nicht von der Erfindung umfassten Vorrichtung mit zwei Detektoren in der Draufsicht;
Fig. 6 eine schematische Darstellung eines ersten Ausführungsbeispiels einer erfindungsgemäßen Vorrichtung mit einem gemeinsamen Detektor in der Draufsicht;
Fig. 7 eine schematische Darstellung eines zweiten Ausführungsbeispiels einer erfindungsgemäßen Vorrichtung mit einem gemeinsamen Detektor in der Draufsicht;
Fig. 8 eine schematische Darstellung eines dritten Ausführungsbeispiels einer erfindungsgemäßen Vorrichtung mit einem gemeinsamen Detektor in der Draufsicht;
Fig. 9 eine schematische Darstellung eines vierten Ausführungsbeispiels einer erfindungsgemäßen Vorrichtung mit einem gemeinsamen Detektor in der Draufsicht;
Fig. 10 eine schematische Darstellung eines ersten Ausführungsbeispiels einer Koordinatenermittlung und
Fig. 11 eine schematische Darstellung eines zweiten Ausführungsbeispiels einer Koordinatenermittlung.

Die Ausführungsbeispiele sind schematisch dargestellt. Gleiche Bezugszeichen bezeichnen gleiche technische Elemente.

In einer ersten beispielhaften und nicht von der Erfindung umfassten Vorrichtung sind eine Halterung 9, eine durch diese gehaltene Kapillare 1, eine erste Beleuchtungsquelle 2.1 und eine zweite Beleuchtungsquelle 2.2, zwei Detektoren 5.1, 5.2, eine Auswerteeinheit 7 und eine Steuereinheit 8 dargestellt.

Die Kapillare 1 ist an der Halterung 9 lösbar befestigt und ragt in einen Arbeitsbereich AB hinein. Die erste Beleuchtungsquelle 2.1 sendet ein Beleuchtungslicht entlang des ersten Erfassungsstrahlengangs a auf die Halterung 9 und die Kapillare 1. Das Beleuchtungslicht wird durch den ersten Detektor 5.1 erfasst. Die zweite Beleuchtungsquelle 2.2 sendet ein Beleuchtungslicht entlang des zweiten Erfassungsstrahlengangs b auf die Kapillare 1, welches durch den zweiten Detektor 5.2 erfasst wird. Die erste Beleuchtungsquelle 2.1 und die zweite Beleuchtungsquelle 2.2 sind in einem Winkel von 90° zueinander angeordnet, sodass die ersten und zweiten Erfassungsstrahlengänge a, b rechtwinklig zueinander stehen und sich die Beleuchtungswinkel in der dargestellten Zeichenebene um 90° unterscheiden. Die Detektoren 5.1, 5.2 erfassen ihre jeweiligen Bilddaten daher unter Aufnahmewinkeln, die sich um 90° in der Zeichenebene unterscheiden.

In den Erfassungsstrahlengängen a, b können optische Elemente wie optische Linsen vorhanden sein, die hier aus Gründen der Übersichtlichkeit nicht dargestellt sind.

In weiteren Ausführungen der Vorrichtung können die Beleuchtungsquellen 2.1, 2.2 auch in anderen Beleuchtungswinkeln zueinander stehen.

Der erste und der zweite Detektor 5.1, 5.2 stehen mit der Auswerteeinheit 7 in einer für die Übertragung von Daten geeigneten Verbindung. Die Auswerteeinheit 7 ist derart konfiguriert, dass anhand der unter unterschiedlichen Aufnahmewinkeln erfassten Bilder das Vorhandensein sowie eine räumliche Ausrichtung der an der Halterung 9 gehaltenen Kapillare 1 durch eine Auswertung der erfassten Bilder und deren unterschiedlicher Abbildungsbereiche ermittelt werden kann.

Außerdem verfügt die Auswerteeinheit 7 über einen Speicher, in dem die erfassten Bilddaten und diesen zugeordnet weitere Informationen als Bilddatensätze abrufbar gespeichert werden.

Die Auswerteeinheit 7 ist ihrerseits mit einer Steuereinheit 8 verbunden, mittels der die Beleuchtungsquellen 2.1, 2.2 und/oder ein motorischer Antrieb 10 der Halterung 9 ansteuerbar sind. Aus Gründen der Übersichtlichkeit sind die Halterung 9 und der Antrieb 10 in den weiteren Figuren nicht dargestellt. Auch werden nicht alle Datenleitungen gezeigt, sondern lediglich symbolisch ein Ausgang der Steuereinheit 8 dargestellt.

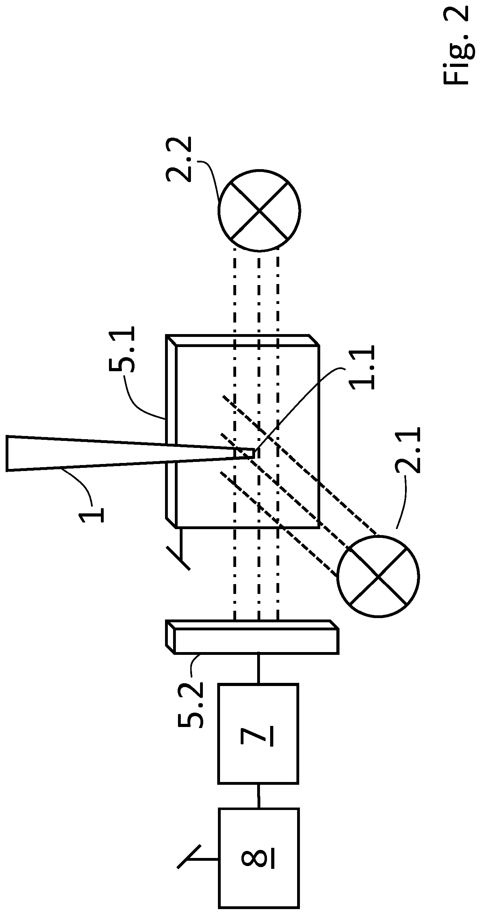

Die Fig. 2 zeigt vereinfacht die Beleuchtung der an der Halterung 9 gehaltenen Kapillare 1 durch die Beleuchtungsquellen 2.1 und 2.2 in einer perspektivischen seitlichen Sicht. Das jeweilige Beleuchtungslicht der Beleuchtungsquellen 2.1 und 2.2 fällt auf die Detektoren 5.1 beziehungsweise 5.2. Die erfassten Bilddaten werden an die Auswerteeinheit 7 geleitet und ausgewertet. Die Kapillare 1 wird aus mindestens zwei seitlichen Richtungen beleuchtet, wobei insbesondere die Kapillarspitze 1.1 erfasst wird und deren aktuelle Ist-Koordinaten ermittelt werden.

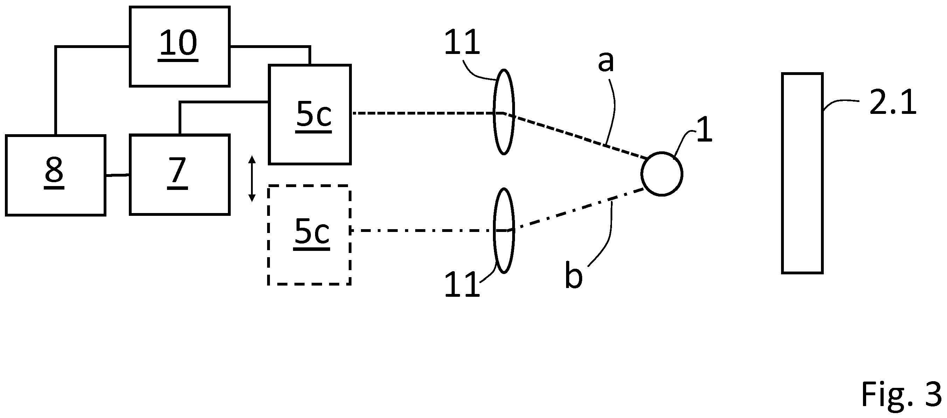

Ein zweites von der Erfindung nicht umfasstes Beispiel der Vorrichtung mit lediglich einer Beleuchtungsquelle 2.1 und einem gemeinsamen Detektor 5c weist in jedem der Erfassungsstrahlengänge a und b ein Objektiv 11 zum Sammeln von Beleuchtungslicht auf (Fig. 3). Der gemeinsame Detektor 5c ist mittels eines Antriebs 10 in zwei beispielhaft dargestellten Positionen platzierbar. Im dargestellten Betriebszustand der Vorrichtung ist der Detektor 5 in dem Erfassungsstrahlengang a platziert. Die Erfassung der Bilddaten erfolgt unter einem ersten Aufnahmewinkel zur Kapillare 1. Für eine Erfassung von Bilddaten unter einem zweiten Aufnahmewinkel kann der Detektor 5 an die zweite Position in dem zweiten Erfassungsstrahlengang b bewegt werden.

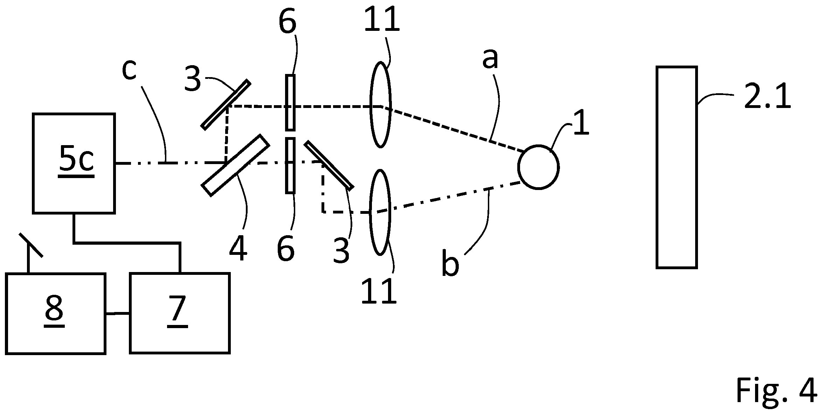

Eine weitere Ausführung einer nicht von der Erfindung umfassten Vorrichtung mit einem Detektor 5 und einer Beleuchtungsquelle 2.1 ist in Fig. 4 gezeigt. In jedem der beiden Erfassungsstrahlengänge a und b ist eine verschließbare Blende 6 angeordnet, welche mittels der Steuereinheit 8 ansteuerbar sind. Die Blenden 6 werden alternierend geschlossen und geöffnet, sodass jeweils entlang eines der Erfassungsstrahlengänge a beziehungsweise b Bilddaten mittels des gemeinsamen Detektors 5c erfasst werden können. Um die Erfassungsstrahlengänge a und b in einem gemeinsamen Erfassungsstrahlengang c zusammen zu führen, sind in den Erfassungsstrahlengängen a und b Spiegel 3 und ein strahlvereinigendes Element 4 in Form eines Strahlteilers angeordnet.

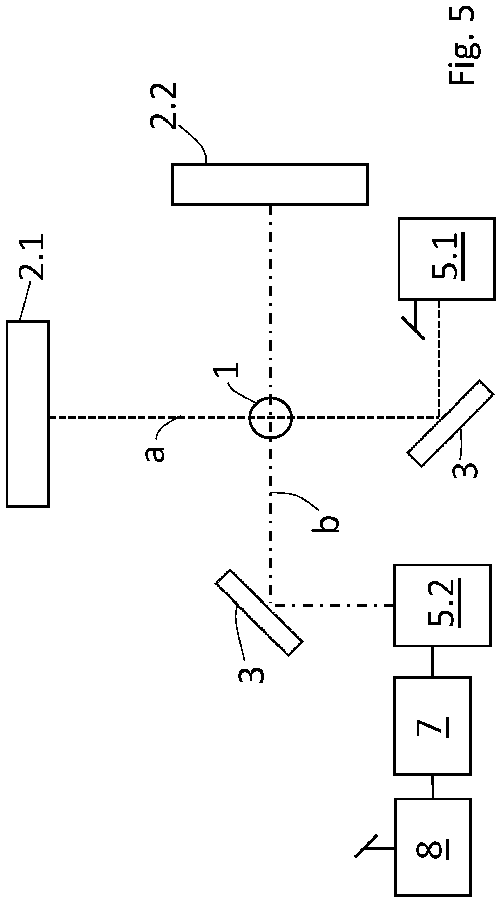

Ein viertes Beispiel einer nicht von der Erfindung umfassten Vorrichtung weist in jedem der Erfassungsstrahlengänge a, b einen Spiegel 3 auf, durch deren Wirkung jeweils das Beleuchtungslicht auf den ersten Detektor 5.1 beziehungsweise auf den zweiten Detektor 5.2 reflektiert wird (Fig. 5). Diese Ausführung erlaubt die Anordnung der Detektoren 5.1, 5.2 in einer anderen Ebene als der Zeichenebene. Außerdem können Spiegel 3 genutzt werden, um den verfügbaren Bauraum effektiv auszunutzen, indem die Erfassungsstrahlengänge a, b geeignet umgelenkt sind.

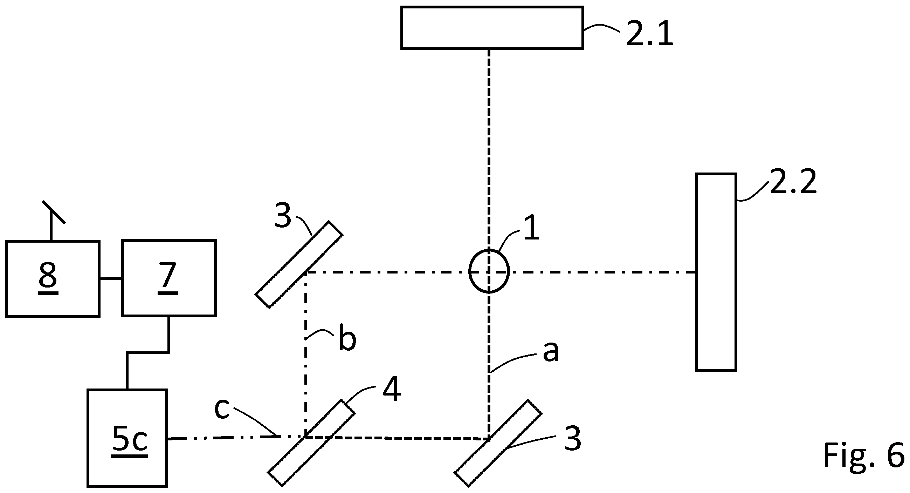

Ein erstes Ausführungsbeispiel einer erfindungsgemäßen Vorrichtung umfasst einen gemeinsamen Detektor 5c (Fig. 6). Die Erfassungsstrahlengänge a, b sind mittels Spiegeln 3 auf ein strahlvereinigendes Element 4 geführt. Das strahlvereinigende Element 4 ist als ein Strahlteiler ausgebildet. Dieser ist für das Beleuchtungslicht der ersten Beleuchtungsquelle 2.1 transmittierend und für das Beleuchtungslicht der zweiten Beleuchtungsquelle 2.2 reflektierend. Die beiden Beleuchtungslichter sind dann in einem gemeinsamen Erfassungsstrahlengang c geführt und auf den gemeinsamen Detektor 5c gerichtet.

In weiteren Ausführungen kann das strahlvereinigende Element 4 ein klassischer Strahlteiler sein.

Um die Zusammenführung der Erfassungsstrahlengänge a, b zu effektivieren, können die Beleuchtungsquellen 2.1, 2.2 Beleuchtungslicht unterschiedlicher Wellenlängen oder Wellenlängenbereiche aussenden. Das Element 4 ist für eine wellenlängenabhängige Transmission beziehungsweise Reflektion der jeweiligen Beleuchtungslichter ausgelegt.

In weiteren Ausführungsmöglichkeiten ist das strahlvereinigende Element 4 ein Polarisationsstrahlteiler. Die Beleuchtungsquellen 2.1, 2.2 senden in diesem Fall Beleuchtungslicht unterschiedlicher Polarisation aus, wobei das Beleuchtungslicht der ersten Beleuchtungsquelle 2.1 durch das Element 4 transmittiert und das Beleuchtungslicht der zweiten Beleuchtungsquelle 2.2 reflektiert wird.

Der gemeinsame Detektor 5c ist dazu ausgebildet, Beleuchtungslicht unterschiedlicher Wellenlänge und/oder Polarisation ortsaufgelöst zu erfassen.

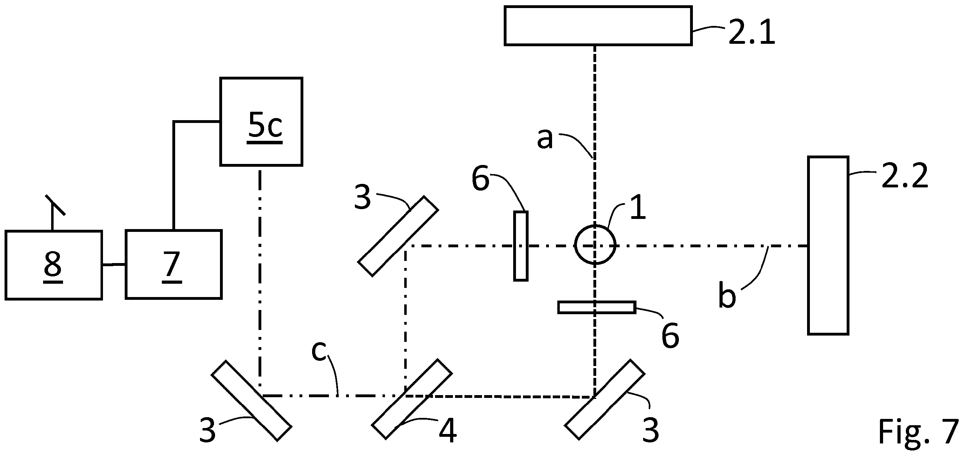

Das in Fig. 7 dargestellte zweite Ausführungsbeispiel einer erfindungsgemäßen Vorrichtung weist in dem gemeinsamen Erfassungsstrahlengang c einen weiteren Spiegel 3 auf, durch den die Beleuchtungslichter auf den gemeinsamen Detektor 5c reflektiert werden. In dem ersten und dem zweiten Erfassungsstrahlengang a, b ist je eine verschließbare Blende 6 hinter der Kapillare 1 angeordnet. Diese sind durch die Steuereinheit 8 ansteuerbar und erlauben die selektive Unterbrechung der Beleuchtung mit dem Beleuchtungslicht der ersten beziehungsweise der zweiten Beleuchtungsquelle 2.1, 2.2. Es ist dabei nicht erforderlich, die Beleuchtungsquellen 2.1, 2.2 abzuschalten, wenn beispielsweise sequentiell Bilddaten der Kapillare 1 mittels des gemeinsamen Detektors 5c erfasst werden sollen.

Alternativ können die Beleuchtungsquellen 2.1, 2.2 sequentiell angesteuert werden und/ oder die Spiegel 3 und das strahlvereinigende Element 4 rotatorisch beziehungsweise translatorisch beweglich ausgeführt sein. Dadurch können die Erfassungsstrahlengänge a, b selektiv geschalten werden. Insbesondere das strahlvereinigende Element 4 könnte in diesem Fall als ein einfacher und kostengünstiger Spiegel ausgebildet sein.

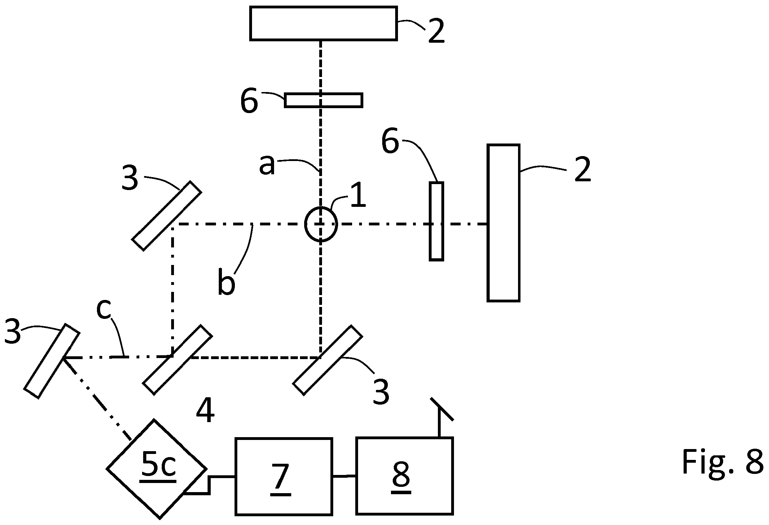

In einem dritten Ausführungsbeispiel sind sowohl in dem ersten Erfassungsstrahlengang a als auch in dem zweiten Erfassungsstrahlengang b je eine verschließbare Blende 6 vor der Kapillare 1 angeordnet (Fig. 8).

In weiteren Ausführungen können Kombinationen der Anordnung der verschließbaren Blenden 6 sowie andere Anzahlen derselben realisiert sein.

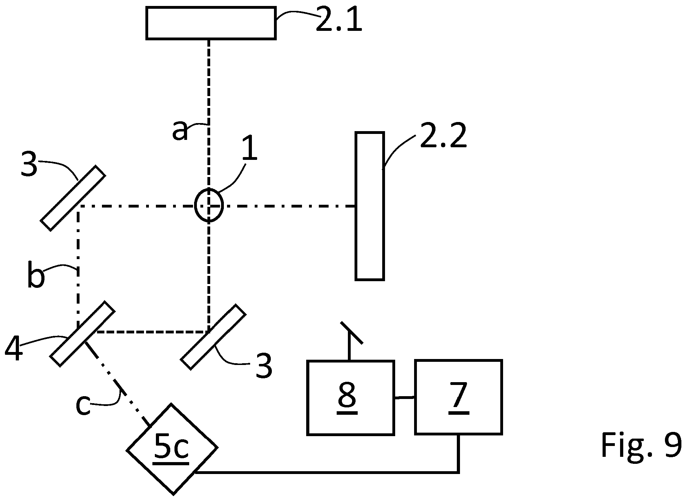

Falls es der zur Verfügung stehende Bauraum zulässt oder erforderlich macht, kann beispielsweise der gemeinsame Erfassungsstrahlengang c in eine Ebene gelenkt sein, die im Beispiel der Fig. 9 nicht in der Zeichenebene liegt. Das strahlvereinigende Element 4 führt die Erfassungsstrahlengänge a, b zusammen und lenkt den gemeinsamen Erfassungsstrahlengang c auf den gemeinsamen Detektor 5c.

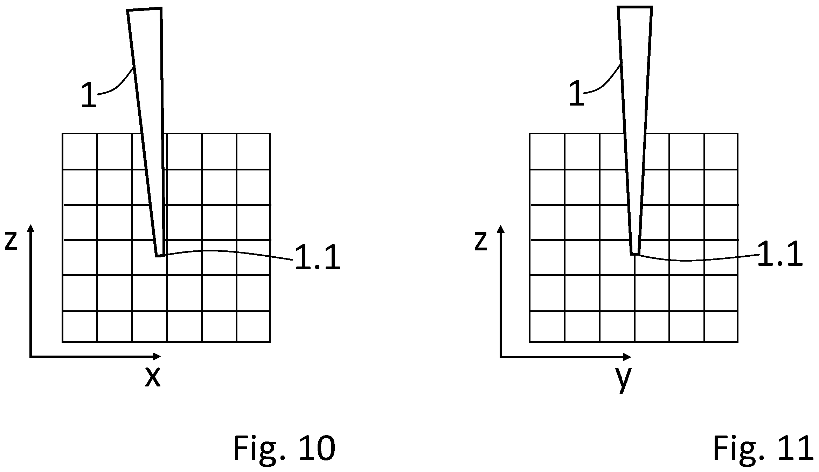

Anhand der Figuren 10 und 11 wird die Ermittlung eines Ist-Zustands der Kapillare 1, insbesondere deren räumliche Koordinaten, mit einem gemeinsamen Detektor 5c erläutert. Beispielsweise werden anhand des erfassten Beleuchtungslichts der ersten Beleuchtungsquelle 2.1 ortsaufgelöste Bilddaten durch den gemeinsamen Detektor 5c erfasst und an die Auswerteeinheit 7 geleitet. In Fig. 10 sind beispielhaft die auf ein virtuelles Koordinatennetz projizierten Ist-Koordinaten der Kapillare 1 und der Kapillarspitze 1.1 in einer x-z-Ebene gezeigt. Deutlich zu erkennen ist die von der Auswerteeinheit 7 ermittelte Ist-Koordinate der Kapillarspitze 1.1.

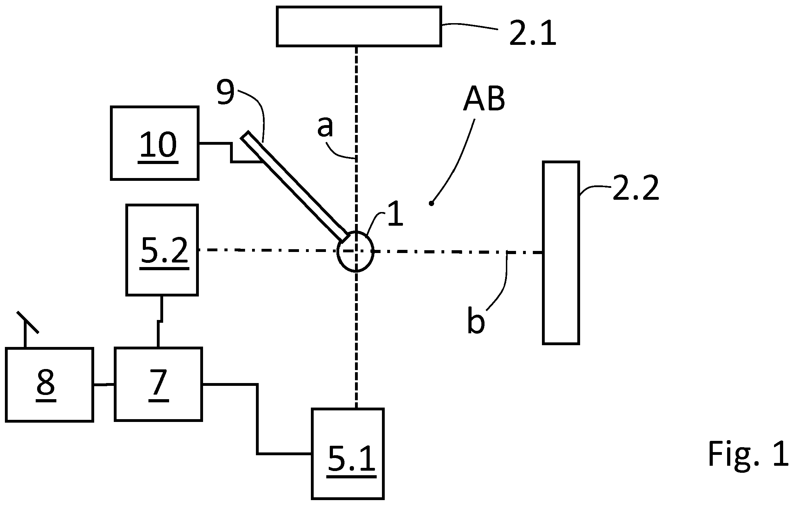

Die Ist-Koordinaten der Kapillare 1 in einer y-z-Ebene werden anhand der bei der Erfassung des Beleuchtungslichts der zweiten Beleuchtungsquelle 2.2 gewonnenen Bilddaten ermittelt und sind in Fig. 11 beispielhaft gezeigt. Die aus beiden Bilddatensätzen gewonnenen zweidimensionalen Koordinaten können durch die Auswerteeinheit 7 in eine dreidimensionale Raumkoordinate als Ist-Koordinaten der Kapillare 1 beziehungsweise der Kapillarspitze 1.1 überführt werden. Sind die ermittelten Abweichungen der Ist-Koordinaten der Kapillare 1 außerhalb zulässiger Toleranzen, ergeht eine entsprechende Information von der Auswerteeinheit 7 an die Steuereinheit 8. Von dieser wird mindestens ein Steuerbefehl generiert und mit diesem der Stellantrieb 10 der Halterung 9 (siehe Fig. 1) so angesteuert, dass die Kapillare 1 Ist-Koordinaten aufweist, die innerhalb der zulässigen Toleranzen liegen.

### Bezugszeichen

- 1: Kapillare
- 1.1: Kapillarspitze
- 2.1: erste Beleuchtungsquelle
- 2.2: zweite Beleuchtungsquelle
- 3: Spiegel
- 4: strahlvereinigendes Element
- 5.1: erster Detektor
- 5.2: zweiter Detektor
- 5c: gemeinsamer Detektor
- 6: verschließbare Blende
- 7: Auswerteeinheit
- 8: Steuereinheit
- 9: Halterung
- 10: Antrieb
- 11: Objektiv
- a: erster Erfassungsstrahlengang
- b: zweiter Erfassungsstrahlengang
- c: gemeinsamer Erfassungsstrahlengang
- AB: Arbeitsbereich

## Patentansprüche

1. Kalibriervorrichtung zur Ermittlung der räumlichen Ausrichtung einer an einer Halterung (9) gehaltenen Kapillare (1), mit
- zwei Erfassungsstrahlengängen (a, b),
- einem ortsauflösenden gemeinsamen Detektor (5c),
- wenigstens einer Beleuchtungsquelle (2.1, 2.2) je Erfassungsstrahlengang (a, b),
- der Halterung (9) zum Halten der Kapillare (1) in Form einer Kanüle, einer Nadel oder einer Pipettenspitze,
- einer Auswerteeinheit (7), wobei
- die Halterung (9) mittels der Beleuchtungsquellen (2.1, 2.2) mit Beleuchtungslicht aus mindestens zwei unterschiedlichen Beleuchtungswinkeln beleuchtet werden kann,
- dem gemeinsamen Detektor (5c) die Erfassungsstrahlengänge (a, b) zugeordnet sind, entlang denen je Beleuchtung mit einem der Beleuchtungswinkel jeweils Bilddaten der Halterung (9) unter unterschiedlichen Aufnahmewinkeln von dem gemeinsamen Detektor (5c) sequentiell erfassbar sind,
- die Erfassungsstrahlengänge (a, b) vor dem gemeinsamen Detektor (5c) mittels strahlvereinigender optischer Mittel oder geeigneter Spiegel und/oder optischer Linsen zu einem gemeinsamen Erfassungsstrahlengang (c) zusammengeführt sind, und wobei
- die Auswerteeinheit (7) derart konfiguriert ist, dass anhand der unter den unterschiedlichen Aufnahmewinkeln erfassten Bilddaten das Vorhandensein sowie eine räumliche Ausrichtung einer an der Halterung (7) gehaltenen Kapillare (1) durch eine Auswertung der erfassten Bilddaten ermittelt werden kann.

2. Vorrichtung nach Anspruch 1, **dadurch gekennzeichnet, dass** die Halterung (9) zwischen dem Detektor (5.1, 5.2, 5c) und mindestens einer der Beleuchtungsquellen (2.1, 2.2) angeordnet ist.

3. Vorrichtung nach Anspruch 1, **dadurch gekennzeichnet, dass** die Beleuchtungsquellen (2.1, 2.2) Beleuchtungslicht mit voneinander verschiedenen Wellenlängen aussenden und die Erfassungsstrahlengänge (a, b) vor dem gemeinsamen Detektor (5c) mittels eines optischen strahlvereinigenden Elements (4) zu einem gemeinsamen Erfassungsstrahlengang (c) zusammengeführt sind, wobei das strahlvereinigende Element (4) für eine der Wellenlängen reflektierend und für die andere Wellenlänge transparent ist.

4. Vorrichtung nach Anspruch 1, **dadurch gekennzeichnet, dass** die Beleuchtungsquellen (2.1, 2.2) Beleuchtungslicht mit voneinander verschiedenen Polarisationszuständen aussenden und die Erfassungsstrahlengänge (a, b) vor dem gemeinsamen Detektor (5c) mittels eines Polarisationsstrahlteilers zu einem gemeinsamen Erfassungsstrahlengang (c) zusammengeführt sind, wobei der Polarisationsstrahlteiler für Beleuchtungslicht des einen Polarisationszustands reflektierend und für Beleuchtungslicht des anderen Polarisationszustands transparent ist.

5. Vorrichtung nach Anspruch 1, **dadurch gekennzeichnet, dass** die Beleuchtungsquellen (2.1, 2.2) Beleuchtungslicht aussenden und die Erfassungsstrahlengänge (a, b) vor dem gemeinsamen Detektor (5c) mittels eines Strahlteilers zu einem gemeinsamen Erfassungsstrahlengang (c) zusammengeführt sind.

6. Vorrichtung nach einem der vorhergehenden Ansprüche, **dadurch gekennzeichnet, dass** in den Erfassungsstrahlengängen (a, b) gesteuert verschließbare Blenden (6) vorhanden sind, die wechselweise angesteuert werden beziehungsweise wechselweise angesteuert werden können, so dass entlang des gemeinsamen Erfassungsstrahlengangs (c) jeweils Beleuchtungslicht einer Beleuchtungsquelle (2.1, 2.2) erfassbar ist.

7. Vorrichtung nach einem der vorhergehenden Ansprüche, **dadurch gekennzeichnet, dass** die Beleuchtungsquellen (2.1, 2.2) gesteuert nacheinander ein- und ausgeschaltet werden können.

8. Verfahren zur Ermittlung einer räumlichen Ausrichtung und Position einer an einer Halterung (9) gehaltenen Kapillare (1) in Form einer Kanüle, einer Nadel oder einer Pipettenspitze, wobei
- die Halterung (9) mittels wenigstens zweier Beleuchtungsquellen (2.1, 2.2) aus mindestens zwei unterschiedlichen Beleuchtungswinkeln mit Beleuchtungslicht beleuchtet wird,
- mittels eines ortsaufgelösten gemeinsamen Detektors (5c), dem zwei Erfassungsstrahlengänge (a, b) zugeordnet sind, entlang denen je Beleuchtung mit einem der Beleuchtungswinkel jeweils Bilddaten der beleuchteten Halterung (9) unter unterschiedlichen Aufnahmewinkeln sequentiell erfasst werden und die Erfassungsstrahlengänge (a, b) vor dem gemeinsamen Detektor (5c) mittels strahlvereinigender optischer Mittel oder geeigneter Spiegel und/oder optischer Linsen zu einem gemeinsamen Erfassungsstrahlengang (c) zusammengeführt werden,
- die erfassten Bilddaten als Bilddatensätze an eine Auswerteeinheit (7) übermittelt werden,
- mittels der Auswerteeinheit (7)
- anhand der Bilddatensätze das Vorhandensein einer Kapillare (1) überprüft und verifiziert wird,
- dreidimensionale Ist-Koordinaten von Konturen der Kapillare (1) ortsaufgelöst aus den jeweiligen Bilddatensätzen extrahiert werden,
- die Koordinaten der ermittelten Konturen mit Soll-Koordinaten der Kapillare (1) verglichen werden und
- bei einer unzulässigen Abweichung der ermittelten Konturen von den Soll-Koordinaten Steuerbefehle generiert werden, durch deren Ausführung die Ausrichtung und/oder die Position der Kapillare (1) korrigiert werden.

9. Verfahren nach Anspruch 8, **dadurch gekennzeichnet, dass**
- eine Kapillarspitze (1.1) der Kapillare (1) detektiert und deren Ist-Koordinaten ermittelt werden,
- die Ist-Koordinaten der Kapillarspitze (1.1) mit Soll-Koordinaten der Kapillarspitze (1.1) verglichen werden und
- bei einer unzulässigen Abweichung der ermittelten Ist-Koordinaten von den Soll-Koordinaten Steuerbefehle generiert werden, durch deren Ausführung die Ausrichtung und Position der Kapillarspitze (1.1) korrigiert werden.

10. Verfahren nach Anspruch 8 oder 9, **dadurch gekennzeichnet, dass** eine für Beleuchtungslicht mindestens einer der Beleuchtungsquellen (2.1, 2.2) transparente Kapillare (1) an der Halterung (9) befestigt wird, die Kapillare (1) mit Beleuchtungslicht wenigstens einer der Beleuchtungsquellen (2.1, 2.2) durchleuchtet wird und wenigstens ein Bild der durchleuchteten Kapillare (1) erfasst und ausgewertet wird, wobei anhand der Auswertung ein Ist-Zustand der Kapillare (1), deren Außendurchmesser und/oder Innendurchmesser, deren Unversehrtheit, ein Füllstand eines Mediums in der Kapillare (1) und/oder ein Vorhandensein eines Mediums und/oder Partikels in der Kapillare (1) ermittelt wird.

11. Verfahren nach einem der Ansprüche 8 bis 10, **dadurch gekennzeichnet, dass** abwechselnd Beleuchtungslicht der einzelnen Beleuchtungsquellen (2.1, 2.2) auf die Halterung (9) gerichtet wird und je Beleuchtungsvorgang mit einem der Beleuchtungslichter ein Bilddatensatz erfasst wird.

12. Verfahren nach einem der Ansprüche 8 bis 11, **gekennzeichnet durch** die Generierung von Steuerbefehlen, durch deren Ausführung wenigstens eine Position wenigstens eines Probengefäßes an die Ausrichtung und/oder Position der Kapillare (1) angepasst wird.

## Claims

1. Calibration device for determining the spatial orientation of a capillary (1) held on a holder (9), the calibration device comprising
- two detection beam paths (a, b),
- a spatially resolving common detector (5c),
- at least one illumination source (2.1, 2.2) per detection beam path (a, b),
- the holder (9) for holding the capillary (1) in the form of a cannula, a needle or a pipette tip,
- an evaluation unit (7), wherein
- the holder (9) can be illuminated with illumination light from at least two different illumination angles by means of the illumination sources (2.1, 2.2),
- the detection beam paths (a, b), along which in each case image data of the holder (9) can be acquired sequentially at different capture angles by the common detector (5c) under each illumination at one of the illumination angles, are assigned to the common detector (5c),
- the detection beam paths (a, b) are brought together upstream of the common detector (5c) by means of beam-combining optical means or a suitable mirror and/or optical lenses to form a common detection beam path (c), and wherein
- the evaluation unit (7) is configured in such a way that, based on the image data acquired at the different capture angles, the presence and spatial orientation of a capillary (1) held on the holder (7) can be determined by evaluating the acquired image data.

2. Device according to claim 1, **characterized in that** the holder (9) is arranged between the detector (5.1, 5.2, 5c) and at least one of the illumination sources (2.1, 2.2).

3. Device according to claim 1, **characterized in that** the illumination sources (2.1, 2.2) emit illumination light with wavelengths that are different from each other, and the detection beam paths (a, b) are brought together upstream of the common detector (5c) by means of an optical beam-combining element (4) to form a common detection beam path (c), the beam-combining element (4) being reflective for one of the wavelengths and transparent for the other wavelength.

4. Device according to claim 1, **characterized in that** the illumination sources (2.1, 2.2) emit illumination light with polarization states that are different from each other, and the detection beam paths (a, b) are brought together upstream of the common detector (5c) by means of a polarization beam splitter to form a common detection beam path (c), the polarization beam splitter being reflective for illumination light of one polarization state and transparent for illumination light of the other polarization state.

5. Device according to claim 1, **characterized in that** the illumination sources (2.1, 2.2) emit illumination light, and the detection beam paths (a, b) are brought together upstream of the common detector (5c) by means of a beam splitter to form a common detection beam path (c).

6. Device according to any one of the preceding claims, **characterized in that** diaphragms (6) which can be closed in a controlled manner are present in the detection beam paths (a, b), which diaphragms are actuated alternately or can be actuated alternately such that in each case illumination light from one illumination source (2.1, 2.2) is detectable along the common detection beam path (c).

7. Device according to any one of the preceding claims, **characterized in that** the illumination sources (2.1, 2.2) can be switched on and off one after the other in a controlled manner.

8. Method for determining a spatial orientation and position of a capillary (1) in the form of a cannula, a needle or a pipette tip held on a holder (9), wherein
- the holder (9) is illuminated with illumination light from at least two different illumination angles by means of at least two illumination sources (2.1, 2.2),
- by means of a spatially resolved common detector (5c), to which two detection beam paths (a, b) are assigned, in each case image data of the illuminated holder (9) are acquired sequentially at different capture angles along these under illumination at each of the illumination angles and the detection beam paths (a, b) are brought together upstream of the common detector (5c) by means of beam-combining optical means or a suitable mirror and/or optical lenses to form a common detection beam path (c),
- the acquired image data are transmitted as sets of image data to an evaluation unit (7),
- by means of the evaluation unit (7)
- the presence of a capillary (1) is checked and verified based on the sets of image data,
- three-dimensional actual coordinates of contours of the capillary (1) are extracted in a spatially resolved manner from the respective sets of image data,
- the coordinates of the determined contours are compared with target coordinates of the capillary (1), and
- if the determined contours impermissibly deviate from the target coordinates, control commands are generated, the execution of which corrects the orientation and/or position of the capillary (1).

9. Method according to claim 8, **characterized in that**
- a capillary tip (1.1) of the capillary (1) is detected, and the actual coordinates thereof are determined,
- the actual coordinates of the capillary tip (1.1) are compared with target coordinates of the capillary tip (1.1), and
- if the determined actual coordinates impermissibly deviate from the target coordinates, control commands are generated, the execution of which corrects the orientation and position of the capillary tip (1.1).

10. Method according to claim 8 or 9, **characterized in that** a capillary (1) which is transparent to illumination light from at least one of the illumination sources (2.1, 2.2) is mounted on the holder (9), the capillary (1) is illuminated with illumination light from at least one of the illumination sources (2.1, 2.2), and at least one image of the illuminated capillary (1) is captured and evaluated, wherein an actual state of the capillary (1), the external diameter and/or internal diameter thereof, the integrity thereof, a fill level of a medium in the capillary (1) and/or a presence of a medium and/or particles in the capillary (1) is determined on the basis of the evaluation.

11. Method according to any one of claims 8 to 10, **characterized in that** illumination light from the individual illumination sources (2.1, 2.2) is alternately directed onto the holder (9), and a set of image data is acquired for each illumination process using one of the illumination lights.

12. Method according to any one of claims 8 to 11, **characterized by** generating control commands, the execution of which adjusts at least a position of at least one sample vessel to the orientation and/or position of the capillary (1).

## Revendications

1. Dispositif d'étalonnage pour la détermination de l'orientation spatiale d'un capillaire (1) retenu sur un élément de retenue (9), avec
- deux chemins optiques d'acquisition (a, b),
- un détecteur (5c) commun à résolution spatiale,
- au moins une source d'éclairage (2.1, 2.2) pour chaque chemin optique d'acquisition (a, b),
- l'élément de retenue (9) pour retenir le capillaire (1) sous forme d'une canule, d'une aiguille ou d'une pointe de pipette,
- une unité d'évaluation (7), dans lequel
- l'élément de retenue (9) peut être éclairé au moyen des sources d'éclairage (2.1, 2.2) avec une lumière d'éclairage provenant d'au moins deux angles d'éclairage différents,
- les chemins optiques d'acquisition (a, b), le long desquels respectivement des données d'image de l'élément de retenue (9) peuvent être acquises de manière séquentielle par le détecteur (5c) commun selon différents angles d'enregistrement pour chaque éclairage avec un des angles d'éclairage, sont associés au détecteur (5c) commun,
- les chemins optiques d'acquisition (a, b) sont réunis devant le détecteur (5c) commun en un chemin optique d'acquisition (c) commun à l'aide de moyens optiques combineurs de faisceaux ou de miroirs adaptés et/ou de lentilles optiques, et dans lequel
- l'unité d'évaluation (7) est configurée de telle sorte que, sur la base des données d'image acquises selon les différents angles d'enregistrement, la présence ainsi qu'une orientation spatiale d'un capillaire (1) retenu sur l'élément de retenue (7) peut être déterminée par une évaluation des données d'image acquises.

2. Dispositif selon la revendication 1, **caractérisé en ce que** l'élément de retenue (9) est disposé entre le détecteur (5.1, 5.2, 5c) et au moins une des sources d'éclairage (2.1, 2.2) .

3. Dispositif selon la revendication 1, **caractérisé en ce que** les sources d'éclairage (2.1, 2.2) émettent une lumière d'éclairage avec des longueurs d'onde différentes les unes des autres et les chemins optiques d'acquisition (a, b) sont réunis devant le détecteur (5c) commun en un chemin optique d'acquisition (c) commun à l'aide d'un élément optique combineur de faisceaux (4), dans lequel l'élément combineur de faisceaux (4) est réfléchissant pour une des longueurs d'onde et transparent pour l'autre longueur d'onde.

4. Dispositif selon la revendication 1, **caractérisé en ce que** les sources d'éclairage (2.1, 2.2) émettent une lumière d'éclairage avec des états polarisants différents les uns des autres et les chemins optiques d'acquisition (a, b) sont réunis devant le détecteur (5c) commun en un chemin optique d'acquisition (c) commun à l'aide d'un séparateur de faisceau polarisant, dans lequel le séparateur de faisceau polarisant est réfléchissant pour la lumière d'éclairage de l'un des états polarisants et transparent pour la lumière d'éclairage de l'autre état polarisant.

5. Dispositif selon la revendication 1, **caractérisé en ce que** les sources d'éclairage (2.1, 2.2) émettent une lumière d'éclairage et les chemins optiques d'acquisition (a, b) sont réunis devant le détecteur (5c) commun en un chemin optique d'acquisition (c) commun à l'aide d'un des séparateurs de faisceau.

6. Dispositif selon l'une quelconque des revendications précédentes, **caractérisé en ce que** des diaphragmes (6) pouvant être fermés de manière commandée, qui peuvent être commandés alternativement ou sont commandés alternativement de sorte que respectivement la lumière d'éclairage d'une source d'éclairage (2.1, 2.2) peut être acquise le long du chemin optique d'acquisition (c) commun, sont présents dans les chemins optiques d'acquisition (a, b).

7. Dispositif selon l'une quelconque des revendications précédentes, **caractérisé en ce que** les sources d'éclairage (2.1, 2.2) peuvent être mises en circuit et hors circuit l'une après l'autre de manière commandée.

8. Procédé pour la détermination d'une orientation spatiale et position d'un capillaire (1) retenu sur un élément de retenue (9) sous forme d'une canule, d'une aiguille ou d'une pointe de pipette, dans lequel
- l'élément de retenue (9) est éclairé avec une lumière d'éclairage à l'aide d'au moins deux sources d'éclairage (2.1, 2.2) provenant d'au moins deux angles d'éclairage différents,
- à l'aide d'un détecteur (5c) commun à résolution spatiale, auquel sont associés deux chemins optiques d'acquisition (a, b), respectivement des données d'image de l'élément de retenue (9) éclairé sont acquises de manière séquentielle le long de ceux-ci selon différents angles d'enregistrement pour chaque éclairage avec un des angles d'éclairage et les chemins optiques d'acquisition (a, b) sont réunis devant le détecteur (5c) commun en un chemin optique d'acquisition (c) commun à l'aide de moyens optiques combineurs de faisceaux ou de miroirs adaptés et/ou de lentilles optiques,
- les données d'image acquises sont transmises en tant que jeux de données d'image à une unité d'évaluation (7),
- à l'aide de l'unité d'évaluation (7)
- la présence d'un capillaire (1) est contrôlée et vérifiée sur la base des jeux de données d'image,
- les coordonnées réelles tridimensionnelles des contours du capillaire (1) sont extraites des jeux de données d'image respectifs avec une résolution spatiale,
- les coordonnées des contours déterminés sont comparées aux coordonnées de consigne du capillaire (1) et
- en cas d'écart inadmissible entre les contours déterminés et les coordonnées de consigne, des instructions de commande sont générées, par l'exécution desquelles l'orientation et/ou la position du capillaire (1) sont corrigées.

9. Procédé selon la revendication 8, **caractérisé en ce que**
- une pointe de capillaire (1.1) du capillaire (1) est détectée et ses coordonnées réelles sont déterminées,
- les coordonnées réelles de la pointe de capillaire (1.1) sont comparées aux coordonnées de consigne de la pointe de capillaire (1.1) et
- en cas d'écart inadmissible entre les coordonnées réelles déterminées et les coordonnées de consigne, des instructions de commande sont générées, par l'exécution desquelles l'orientation et la position de la pointe du capillaire (1) sont corrigées.

10. Procédé selon la revendication 8 ou 9, **caractérisé en ce qu'**un capillaire (1) transparent pour la lumière d'éclairage d'au moins une des sources d'éclairage (2.1, 2.2) est fixé sur l'élément de retenue (9), le capillaire (1) est traversé par la lumière d'éclairage d'au moins une des sources d'éclairage (2.1, 2.2) et au moins une image du capillaire (1) traversé est acquise et évaluée, dans lequel un état réel du capillaire (1), le diamètre extérieur et/ou diamètre intérieur de celui-ci, l'intégrité de celui-ci, un niveau de remplissage d'un milieu dans le capillaire (1) et/ou une présence d'un milieu et/ou d'une particule dans le capillaire (1) est déterminé(e) sur la base de l'évaluation.

11. Procédé selon l'une quelconque des revendications 8 à 10, **caractérisé en ce que** la lumière d'éclairage des différentes sources d'éclairage (2.1, 2.2) est dirigée tour à tour sur l'élément de retenue (9) et un jeu de données d'image est acquis pour chaque processus d'éclairage avec une des lumières d'éclairage.

12. Procédé selon l'une quelconque des revendications 8 à 11, **caractérisé par** la génération d'instructions de commande, par l'exécution desquelles au moins une position d'au moins un récipient pour échantillon est adaptée à l'orientation et/ou position du capillaire (1).
